# EUROPÄISCHE PATENTANMELDUNG

(11) **EP 1 852 401 A1**
(43) Veröffentlichungstag der Anmeldung: **07.11.2007**
(21) Anmeldenummer: 07007956.1
(22) Anmeldetag: 19.04.2007
(51) Int. Cl.: C03B 23/025, C03B 23/203, C03B 23/22, G03F 1/00

(54) **Formkörper aus Glas oder Glaskeramik und Verfahren zu dessen Herstellung**

(30) Priorität: 04.05.2006 DE 102006020991
(71) Anmelder: Carl Zeiss AG, 73447 Oberkochen (DE); Hensoldt AG, 35576 Wetzlar (DE)
(72) Erfinder: Wang, Hexin, 89551 Königsbronn (DE); Becker, Kurt, 35435 Wettenberg (DE); Autschbach, Lutz, 73447 Oberkochen (DE)
(74) Vertreter: Kohler Schmid Möbus

(57) **Zusammenfassung**

Ein Verfahren zum Herstellen eines Formkörpers (10) aus Glas oder Glaskeramik umfasst die Schritte: (a) Auflegen von mindestens zwei Glasrohlingen (12a, 12b) nebeneinander auf eine geformte Oberfläche (14) einer temperaturbeständigen Absenkform (13), (b) Absenken der Glasrohlinge (12a, 12b) auf die geformte Oberfläche (14) durch Erhitzen der Absenkform (13) und der Glasrohlinge (12a, 12b), (c) Befestigen der abgesenkten Glasrohlinge (10a, 10b) aneinander zur Bildung des Formkörpers (10), und (d) Abheben des Formkörpers (10) von der Absenkform (13). Ein Formkörper (10) umfasst mindestens zwei aneinander befestigte, durch Absenken geformte Glasrohlinge (10a, 10b).

## Beschreibung

### Stand der Technik

Die Erfindung betrifft ein Verfahren zum Herstellen eines Formkörpers aus Glas oder Glaskeramik, einen Formkörper, ein Fernglas mit mindestens einem solchen Formkörper, sowie ein durch den Formkörper gebildetes EUV-Spiegelelement und Röntgenspiegelelement.

Ein Verfahren zur Herstellung eines Formkörpers aus Glas oder Glaskeramik ist beispielsweise durch die EP 1 391 433 A2 bekannt geworden. In dieser Druckschrift wird ein durch eine Glasplatte gebildeter Rohling zunächst auf eine temperaturbeständige Absenkform aufgelegt. Danach wird dieser zusammen mit der Absenkform erhitzt, wobei der erhitzte Rohling sich unter Schwerkrafteinfluss auf die geformte Oberfläche der Absenkform absenkt und dadurch in die gewünschte Form gebracht wird. Solche Absenkverfahren werden zur Herstellung von Röntgenspiegelelementen für Röntgenteleskope und neuerdings auch zur Herstellung von EUV-Spiegelelementen eingesetzt, wie z.B. in der unveröffentlichten PCT/EP2005/011894 der Anmelderin näher beschrieben ist.

Nach dem Absenken kann eine Prüfung des durch Absenken erhaltenen Formkörpers und ggf. eine Nachbearbeitung zur Beseitigung von Formfehlern erfolgen, wie in der PCT/EP2005/011894 angegeben ist. Die Qualität der mit dem oben beschriebenen Verfahren hergestellten Formkörper hängt davon ab, ob der Formkörper eine kontinuierliche Oberfläche aufweist, oder ob die herzustellende Form z.B. einen Knick oder eine Stufe hat, wie dies z.B. bei einer Freiformfläche der Fall sein kann. Bei derartigen Oberflächenformen tritt das Problem auf, dass durch das Absenken die gewünschte Form ggf. nicht exakt wiedergegeben und somit keine ausreichend formtreue Reproduktion erzeugt werden kann. Wird der Formkörper anschließend mit einer reflektierenden Beschichtung versehen, so können unerwünschte Deformationen der Spiegelgeometrie auftreten, die sich nur mit entsprechendem Aufwand (Nachbearbeitung) oder überhaupt nicht mehr beheben lassen.

Aus der DE 103 44 444 A1 ist ein Absenkverfahren bekannt geworden, bei dem ein Glasrohling lediglich in einem Teilbereich durch Schwerkraftabsenken geformt werden soll. Hierzu wird in dem umzuformenden Teilbereich des Glasrohlings vor dem Schwerkraftabsenken eine Materialverjüngung vorgesehen, wodurch die Formung des Glasrohlings unterstützt werden soll.

### Aufgabe der Erfindung

Aufgabe der Erfindung ist es, ein Verfahren der eingangs genannten Art, welches eine möglichst formtreue Reproduktion von beliebigen Flächenformen ermöglicht, sowie einen Formkörper, ein Fernglas mit einem solchen Formkörper und durch den Formkörper gebildete Spiegelelemente bereitzustellen.

### Gegenstand der Erfindung

Diese Aufgabe wird gelöst durch ein Verfahren mit den Schritten: (a) Auflegen von mindestens zwei Glasrohlingen nebeneinander auf eine geformte Oberfläche einer temperaturbeständigen Absenkform, (b) Absenken der Glasrohlinge auf die geformte Oberfläche durch Erhitzen der Absenkform und der Glasrohlinge, (c) Befestigen der abgesenkten Glasrohlinge aneinander zur Bildung des Formkörpers, und (d) Abheben des Formkörpers von der Absenkform.

Im Gegensatz zu den bekannten Absenkverfahren wird beim erfindungsgemäßen Verfahren ein Formkörper dadurch hergestellt, dass zwei oder mehr Rohlinge auf dieselbe Absenkform aufgelegt und gemeinsam abgesenkt werden. Nach dem Absenken befinden sich die Rohlinge in einer genau definierten Lage relativ zueinander. Die Rohlinge werden im Folgenden derart aneinander befestigt, dass diese relative Lage nicht mehr verändert werden kann (Lagefixierung). Die relative Lagegenauigkeit wird somit schon im Replikationsprozess festgelegt, d.h. bevor der Formkörper von der gemeinsamen Absenkform abgehoben wird.

Im Gegensatz hierzu ist aus dem Stand der Technik (s.o.) lediglich bekannt, einen einzigen Rohling auf eine Absenkform aufzulegen, wodurch je nach Art der nachzubildenden Oberfläche ggf. keine formtreue Replikation erzielt werden kann. Zwar ist es auch möglich, den Formkörper herzustellen, indem jeder einzelne der Rohlinge jeweils auf eine eigene Absenkform abgesenkt wird und anschließend die abgesenkten Rohlinge zueinander ausgerichtet werden. Bei dieser Ausrichtung handelt es sich um einen aufwändigen Montage- und Justage-Prozess, der bei dem erfindungsgemäßen Verfahren nicht durchgeführt werden muss, da die abgesenkten Rohlinge unmittelbar auf der Absenkform in ihrer Lage zueinander fixiert werden.

Wesentlich für die Herstellung einer Vielzahl von Formkörpern mit identischer Form mit Hilfe des erfindungsgemäßen Verfahrens ist es, dass die Endposition, in der die Rohlinge sich nach dem Absenken befinden, genau reproduziert werden kann. Dies wird einerseits dadurch erreicht, dass die Anfangsposition, in der die Rohlinge auf die Absenkform aufgelegt werden, genau festgelegt wird, und andererseits dadurch, dass die Bedingungen beim Absenken, d.h. beim Erhitzen der Rohlinge, jeweils identisch gewählt werden.

Bei einer bevorzugten Variante erfolgt in Schritt (c) das Befestigen stoffschlüssig, insbesondere durch zumindest punktuelles Verkleben oder Verschweißen an einer Berührungskante, an der die abgesenkten Glasrohlinge zumindest teilweise aneinander anliegen.

Um das Anliegen der beiden abgesenkten Rohlinge an der Berührungskante zu erreichen, kann beispielsweise die Kante eines der Rohlinge schon vor dem Absenken auf der Absenkform aufliegen, d.h. sich schon in der Endposition befinden, und die Kante des weiteren Rohlings legt sich durch das Absenken an diese Kante an. Alternativ können zwei benachbarte Kanten auch beim Auflegen der Rohlinge noch nicht auf der Absenkform aufliegen und liegen erst nach dem Absenken an einer gemeinsamen Berührungskante aneinander an. Für die Lagefixierung ist es hierbei ausreichend, wenn ein enger Spalt zwischen den Rohlingen verbleibt.

Entscheidend ist es, dass die Lage der beiden abgesenkten Rohlinge relativ zueinander fixiert wird, sodass diese sich beim Abheben des Formkörpers von der Form nicht mehr verändert. Hierfür ist es nicht zwingend notwendig, dass die abgesenkten Rohlinge an der gesamten Berührungskante aneinander befestigt werden. Es muss jedoch darauf geachtet werden, dass der Formkörper nach dem Abheben keinen allzu großen mechanischen Beanspruchungen ausgesetzt ist, bevor dieser zur Erhöhung der mechanischen Stabilität auf einem Träger befestigt werden kann. Eine Temperaturerhöhung und damit einhergehende Ausdehnung des Formkörpers, welche bei der nachfolgenden Beschichtung des Formkörpers mit einer reflektierenden Beschichtung erfolgt, können beim Befestigen z.B. durch Wahl eines geeigneten Klebstoffs (z.B. Epoxidharze, gefüllt oder ungefüllt, für Beschichtungstemperaturen bis 150 °C, oder Klebstoffe auf anorganischer Basis für höhere Beschichtungstemperaturen) bereits berücksichtigt werden, sodass die Lagefixierung auch bei der Beschichtung erhalten bleibt.

Bei einer bevorzugten Variante erfolgt das Befestigen durch Anbringen mindestens eines Verbindungsstücks zwischen benachbarten Kanten der abgesenkten Glasrohlinge. Die Verbindungsstücke können entweder für sich allein schon eine Lagefixierung bewirken, die Befestigung der abgesenkten Rohlinge aneinander kann aber auch durch zusätzliches, zumindest punktuelles stoffschlüssiges Verbinden an einer Berührungskante unterstützt werden.

Bei einer besonders vorteilhaften Variante werden in Schritt (c) die abgesenkten Glasrohlinge mittels einer fixierenden Struktur, insbesondere aus faserverstärktem Kunststoff, rückseitig aneinander befestigt. Diese rückseitige Befestigung der abgesenkten Rohlinge aneinander kann alternativ oder zusätzlich zum oben beschriebenen Stoffschluss bzw. zu den Verbindungsstücken vorgenommen werden, während der Formkörper auf der Absenkform aufliegt. Hierdurch können Verkippungen der Spiegel gegeneinander verhindert werden, die ggf. bei der stoffschlüssigen Verbindung allein nicht vollständig verhindert werden können.

Bei einer weiteren, vorteilhaften Variante ist ein Temperaturausdehnungskoeffizient der fixierenden Struktur an den Temperaturausdehnungskoeffizienten der Glasrohlinge angepasst. Hierdurch kann gewährleistet werden, dass die relative Anordnung der abgesenkten Rohlinge auch nach der Fixierung temperaturstabil bleibt, was für das nachfolgende Aufbringen einer Beschichtung vorteilhaft ist (s.u.).

Bei einer besonders bevorzugten Variante werden in einem auf Schritt (d) folgenden Schritt in mindestens einem, bevorzugt in zwei oder mehr Teilbereichen reflektierende Beschichtungen auf den Formkörper aufgebracht. Durch das erfindungsgemäße Verfahren können so Mehrfachspiegel, insbesondere Spiegelpaare oder Tri-Spiegel, hergestellt werden, die auf einem gemeinsamen Formkörper angeordnet sind, welcher insbesondere Knicke oder Stufen aufweist. Durch das erfindungsgemäße Verfahren kann die Lagetoleranz von zwei oder mehr Spiegeln zueinander ohne zusätzliche Justierung eingehalten werden. Alternativ ist es auch möglich, den Formkörper mit einer einzigen reflektierenden Beschichtung in einem Teilbereich zu versehen, der über den Knick hinweg verläuft. Unter dem Begriff "Teilbereich" wird insbesondere auch eine vollständige Seitenfläche des Formkörpers verstanden.

Bei einer weiteren, besonders bevorzugten Variante wird der beschichtete Formkörper rückseitig auf einem Träger befestigt. Der Formkörper wird hierbei bevorzugt auf dem Träger aufgeklebt, wodurch eine hohe mechanische Stabilität erreicht wird.

Bei einer weiteren, bevorzugten Variante wird in einem Schritt (a) vorausgehenden Schritt die Absenkform aus einem temperaturbeständigen Material, insbesondere einer Keramik, hergestellt. Für geeignete Materialien und Verfahren zur Herstellung der Absenkform sei z.B. auf die EP 1 391 433 A2 verwiesen, welche durch Bezugnahme zum Inhalt dieser Anmeldung gemacht wird.

Bei einer besonders vorteilhaften Variante ist die geformte Oberfläche der Absenkform als ein Freiform-Profil, ein Kegelprofil, ein Hyperbel-Profil oder ein Wolter-Profil ausgeformt. Freiform-Profile weisen häufig Stufen oder Knicke auf, Wolter-Profile sind stets mit einem Knick versehen. Formkörper mit den oben angegebenen Profilen lassen sich demzufolge besonders vorteilhaft mit dem hier beschriebenen Verfahren herstellen. Auf der geformten Oberfläche können auch Lagereferenzstrukturen gebildet werden, z.B. Fadenkreuze, welche als Lage-Referenz für die Justage und Montage des Formkörpers dienen. Die optische Wirkung dieser Strukturen ist hierbei vernachlässigbar.

Es versteht sich, dass das oben beschriebene Verfahren in vorteilhafter Weise um zusätzliche Verfahrensschritte ergänzt werden kann, z.B. indem das Absenken durch Anlegen eines Überdrucks oder Unterdrucks unterstützt wird, oder indem eine Nachbearbeitung des Formkörpers vor oder nach dem Beschichten vorgenommen wird. Diesbezüglich wird auf die oben bereits erwähnte EP 1 391 433 A2 sowie auf die PCT/EP2005/011894 verwiesen, die durch Bezugnahme zum Inhalt dieser Anmeldung gemacht wird.

Die Erfindung ist auch realisiert in einem Formkörper, welcher insbesondere nach dem oben beschriebenen Verfahren hergestellt ist, und welcher mindestens zwei aneinander befestigte, durch Absenken geformte Glasrohlinge umfasst. Durch den erfindungsgemäßen Formkörper werden die oben beschriebenen Probleme bei der Justage vermieden.

Der erfindungsgemäße Formkörper weist eine Passfehlertoleranz, auch Peak-To-Valley-Differenz oder PV genannt, von weniger als 100 µm, bevorzugt weniger als 30 µm, insbesondere weniger als 10 µm auf. Die Toleranz der Oberflächenabweichung (auch Passfehlertoleranz genannt oder englisch "tolerance for surface form deviation") wird definiert nach ISO 10110-5: 1996-"Optics and optical instruments - Preparation of drawings for optical elements and systems - Part 5: Surface for tolerences" , deutsche Übersetzung mit der Ref. Nr. DIN ISO10110-5:2000-02. Durch die geringe Passfehlertoleranz können zwei oder mehr Einzelspiegel auf dem Formkörper gebildet werden, deren Lagetoleranz relativ zueinander eine Genauigkeit im Mikrometerbereich aufweist.

Bei einer vorteilhaften Ausführungsform weist der Formkörper eine Anstiegfehlertoleranz (auch Flächentangentenfehlertoleranz genannt, engl. "slope tolerance") von weniger als 5 Minuten, bevorzugt weniger als 0,2 Minuten bei einer Anstiegsbezugslänge von 1 ± 0,1 mm auf. Die Anstiegfehlertoleranz wird definiert nach ISO 10110-12: 1997-"Optics and optical instruments - Preparation of drawings for optical elements and systems - Part 12: Aspheric surfaces", deutsche Übersetzung mit der Ref. Nr. DIN ISO10110-12:2000-02. Die Definition nach der obigen Norm bezieht sich zwar auf Asphären, ist aber auch für Freiformkörper anwendbar.

Bei einer weiteren vorteilhaften Ausführungsform weist der Formkörper mindestens eine beim Absenken an wenigstens einem der Glasrohlinge ausgeformte Lagereferenzstruktur auf.

Bei einer bevorzugten Ausführungsform weist der Formkörper in wenigstens einem, bevorzugt in zwei oder mehr Teilbereichen eine reflektierende Beschichtung auf. Wie oben ausgeführt, kann der Formkörper als Einzelspiegel mit einem Knick (z.B. Wolter-Profil) oder als Mehrfach-Spiegel ausgebildet sein.

Bei einer weiteren vorteilhaften Ausführungsform ist die reflektierende Beschichtung für die Reflexion von Röntgenstrahlung oder EUV-Strahlung ausgelegt. Durch das Absenken können hierbei insbesondere besonders dünne Spiegel mit Wolter-Profil hergestellt werden, wie sie beispielsweise in Röntgen-Teleskopen oder Kollektoren für Beleuchtungssysteme von EUV-Projektionsbelichtungsanlagen zum Einsatz kommen, die ebenfalls Gegensand der vorliegenden Erfindung sind.

Bei einer alternativen Ausführungsform ist die reflektierende Beschichtung für die Reflexion von Licht im sichtbaren Wellenlängenbereich ausgelegt. In diesem Fall können insbesondere mehrere zueinander versetzte und verkippte Einzelspiegel mit hoher relativer Lagegenauigkeit auf einem gemeinsamen Formkörper hergestellt werden. Die Erfindung ist daher auch verwirklicht in einem Fernglas mit einer Mehrzahl von Spiegeln und mit mindestens einem Formkörper mit Beschichtungen für die Reflexion von Licht im sichtbaren Wellenlängenbereich, wobei mindestens zwei der Spiegel durch Teilbereiche des Formkörpers mit der reflektierenden Beschichtung gebildet sind. Durch das Anbringen von mindestens zwei reflektierenden Beschichtungen auf einem gemeinsamen Formkörper kann deren relative Lage zueinander schon während des Replikationsprozesses im Mikrometerbereich genau festgelegt werden, sodass eine Justage der Spiegel zueinander beim Einbau in das Fernglas entfällt.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ausführungsbeispiele sind in der schematischen Zeichnung dargestellt und werden in der nachfolgenden Beschreibung erläutert. Es zeigt
- Fig. 1a,b: eine schematische Darstellung des Gehäuses einer Ausführungsform eines erfindungsgemäßen monokularen Fernglases (Fig. 1 a) sowie einen in diesem befindlichen Strahlengang mit zwei sich gegenüberliegenden Spiegelpaaren (Fig. 1 b),
- Fig. 2a,b: eine Darstellung einer Ausführungsform eines Formkörpers gemäß der Erfindung mit zwei reflektierenden Beschichtungen, welche zwei Spiegel eines der Spiegelpaare von Fig. 1 b bilden, in einer Draufsicht (Fig. 2a) und einer Seitenansicht (Fig. 2b),
- Fig. 3a-d: zwei Glasrohlinge und eine Absenkform in einem seitlichen Schnitt zur Illustration einer Variante des erfindungsgemäßen Verfahrens in unterschiedlichen Verfahrensschritten,
- Fig. 4a-c: zwei Glasrohlinge und eine Absenkform (Fig. 4a) sowie zwei abgesenkte Glasrohlingen (Fig. 4b,c) zur Illustration weiterer Varianten des Verfahrens,
- Fig. 5: eine schematische Darstellung eines Röntgenteleskops mit Röntgenspiegelelementen, welche durch erfindungsgemäße Formkörper gebildet sind, in einer Schnittdarstellung, und
- Fig. 6: eine schematische Darstellung eines EUV-Kollektors für ein Beleuchtungssystem einer Projektionsbelichtungsanlage für die Mikrolithographie mit EUV-Spiegelelementen, welche durch erfindungsgemäße Formkörper gebildet sind, in einem seitlichen Schnitt.

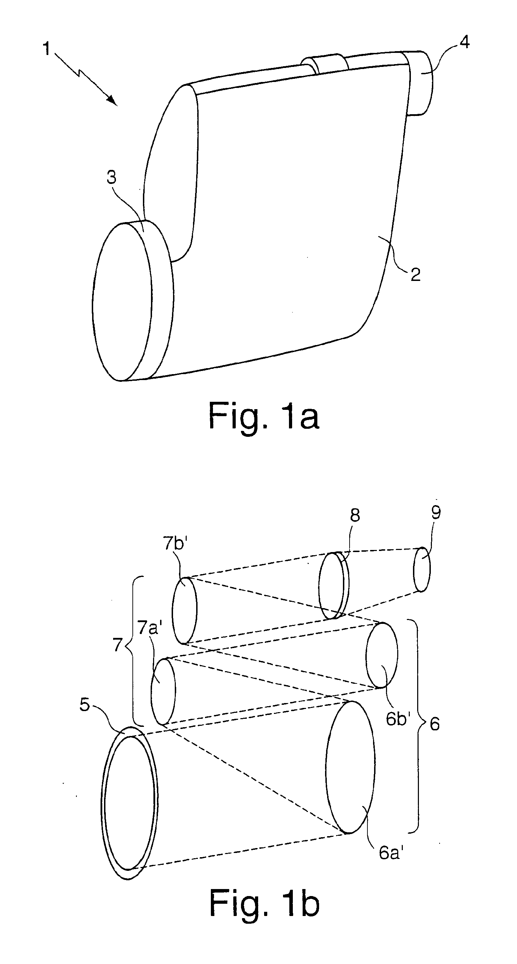

In **Fig. 1a** ist schematisch ein monokulares Fernglas **1** gezeigt, das auch als Spektiv oder Beobachtungsfernrohr bezeichnet wird. Das Fernglas 1 weist ein Gehäuse **2** mit einem Okular **4** und einem Objektiv **3** auf. Der optische Aufbau im Inneren des Fernglases 1 ist stark schematisch in **Fig. 1b** gezeigt. Das Licht tritt in einer Eintrittspupille **5** in das Fernglas 1 ein, trifft auf einen ersten Spiegel **6a'** eines ersten Spiegelpaares **6** und wird von diesem auf einen ersten Spiegel **7a'** eines zweiten, dem ersten Spiegelpaar 6 gegenüberliegenden Spiegelpaares **7** reflektiert. Von dort läuft das Licht weiter zu einem zweiten Spiegel **6b'** des ersten Spiegelpaares 6 und wird von diesem zu einem zweiten Spiegel **7b'** des zweiten Spiegelpaares 7 reflektiert. Das Licht tritt danach durch eine verstellbare Innenfokussierung **8** und tritt schließlich in einen Okularadapter **9** ein. Zur Vereinfachung sind in Fig. 1 b die im Strahlengang vorhandenen Blenden nicht dargestellt.

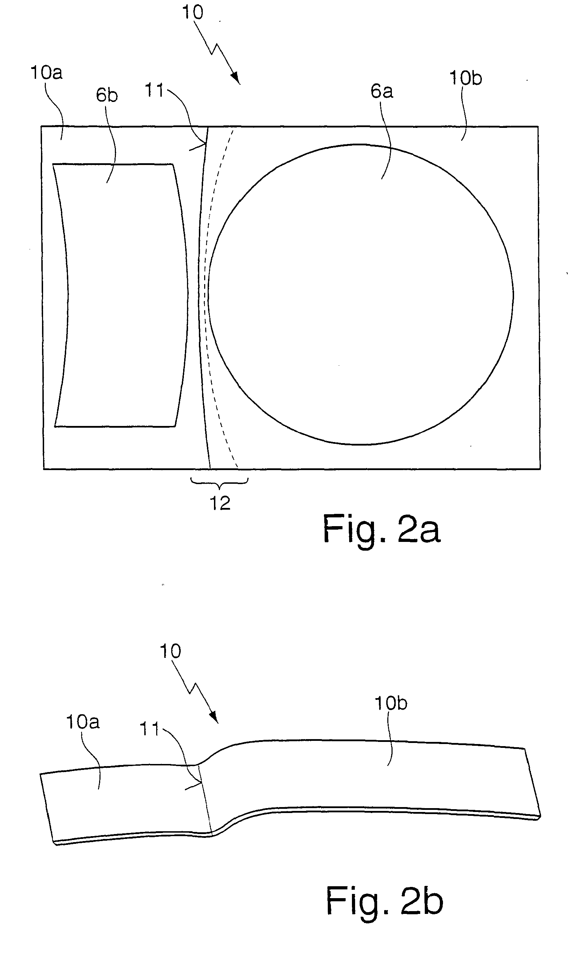

Die Relativlage der Spiegel 6a', 6b' bzw. 7a', 7b' der Spiegelpaare 6, 7 muss in der Größenordnung von Mikrometern exakt aufeinander abgestimmt werden. Dies erfolgte bislang durch ein Einbringen der Spiegel 6a', 6b' bzw. 7a', 7b' in einen Innenträger und anschließende Justage relativ zueinander, was einen erheblichen Aufwand erforderte. Die Fixierung der relativen Anordnung der Spiegel 6a', 6b' z.B. des ersten Spiegelpaares 6 wird wie nachfolgend beschrieben dadurch erreicht, dass auf einem gemeinsamen Formkörper **10,** wie er in **Fig. 2a** und **Fig. 2b** gezeigt ist, in Teilbereichen **6a, 6b** reflektierende Beschichtungen aufgebracht werden, welche die Spiegel 6a', 6b' bilden. Die relative Lage der Teilbereiche 6a, 6b lässt sich beim Aufbringen der reflektierenden Beschichtung sehr genau einstellen. Selbstverständlich kann auch das zweite Spiegelpaar 7 auf dieselbe Weise hergestellt werden.

Der Formkörper 10 muss als Freiformfläche mit einer geringen Passfehlertoleranz von weniger als 100 µm hergestellt werden, um das Auftreten von Aberrationen durch Deformationen der Spiegel 6a', 6b' möglichst gering zu halten. Problematisch bei der Herstellung des Formkörpers 10 mit einer solchen Passfehlertoleranz z.B. mittels eines üblichen Absenkverfahrens sind die stark unterschiedlichen Lageebenen und -winkel der beiden Spiegel 6a', 6b'. Diese haben zwischen dem ersten Teilbereich 6a und dem zweiten Teilbereich 6b ein Knick **12** in dem Formkörper 10 zur Folge. Dieser Knick 12 verhindert, dass der Formkörper 10 durch das Absenken eines einzigen Glasrohlings hergestellt werden kann, da in diesem Fall die notwendige Passfehlertoleranz überschritten werden würde.

Daher ist der Formkörper 10 aus zwei aneinander befestigten, durch Absenken hergestellten Glasrohlingen **10a, 10b** gebildet, die an einer Berührungskante **11** aneinander anliegen und durch zumindest punktuelles Verkleben an der Berührungskante 11 zueinander lagefixiert sind. Hierdurch kann das Aufbringen der reflektiven Beschichtungen in den Teilbereichen 6a, 6b gemeinsam erfolgen, im Gegensatz zur herkömmlichen Herstellung von Spiegelpaaren, bei der zunächst zwei einzelne Spiegelelemente hergestellt und anschließend zusammengefügt und justiert werden müssen.

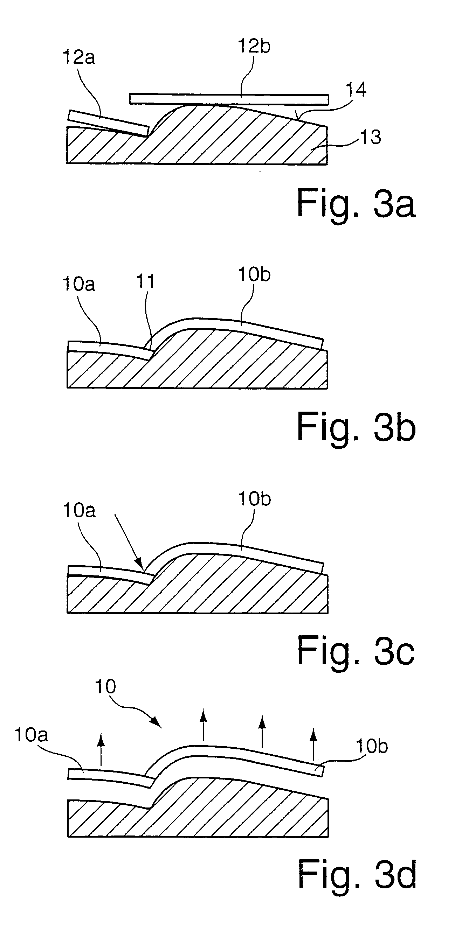

Der Formkörper 10 wird hierbei in einem Verfahren hergestellt, dessen einzelne Verfahrensschritte in **Fig. 3a-d** dargestellt sind. Wie in Fig. 3a gezeigt, werden zunächst zwei Glasrohlinge **12a, 12b,** die als Planplatten ausgeformt sind, nebeneinander auf eine geformte Oberfläche **14** einer temperaturbeständigen Absenkform **13** aufgelegt. In einem nachfolgenden Verfahrensschritt werden die Glasrohlinge 12a, 12b auf die geformte Oberfläche 14 durch Erhitzen der Absenkform 13 mit den Glasrohlingen 12a, 12b abgesenkt. Hierdurch bilden sich aus den Planplatten die abgesenkten und geformten Glasrohlinge 10a, 10b, wie in Fig. 3b gezeigt. Nach dem Absenken liegen die abgesenkten Glasrohlinge 10a, 10b an einer gemeinsamen Berührungskante 11 an. Dort werden sie in einem nachfolgenden Verfahrensschritt durch Verkleben aneinander befestigt, was in Fig. 3c durch einen Pfeil dargestellt ist. In einem in Fig. 3d gezeigten, abschließenden Verfahrensschritt werden die aneinander befestigten, den Formkörper 10 bildenden, geformten Glasrohlinge 10a, 10b von der Absenkform 13 abgehoben. Der so gebildete Formkörper 10 wird in einem nachfolgenden Verfahrensschritt in den zwei Teilbereichen 6a, 6b mit einer reflektierenden Beschichtung versehen und schließlich auf einem nicht bildlich dargestellten Innenträger in dem Gehäuse 2 des Fernglases 1 von Fig. 1 a aufgeklebt. Der Formkörper 10 kann hierbei in einem oder mehreren Teilbereichen mit einer Lagereferenzstruktur, z.B. einem Fadenkreuz, versehen sein, wodurch die Justage des Formkörpers 10 auf dem Träger erleichtert wird.

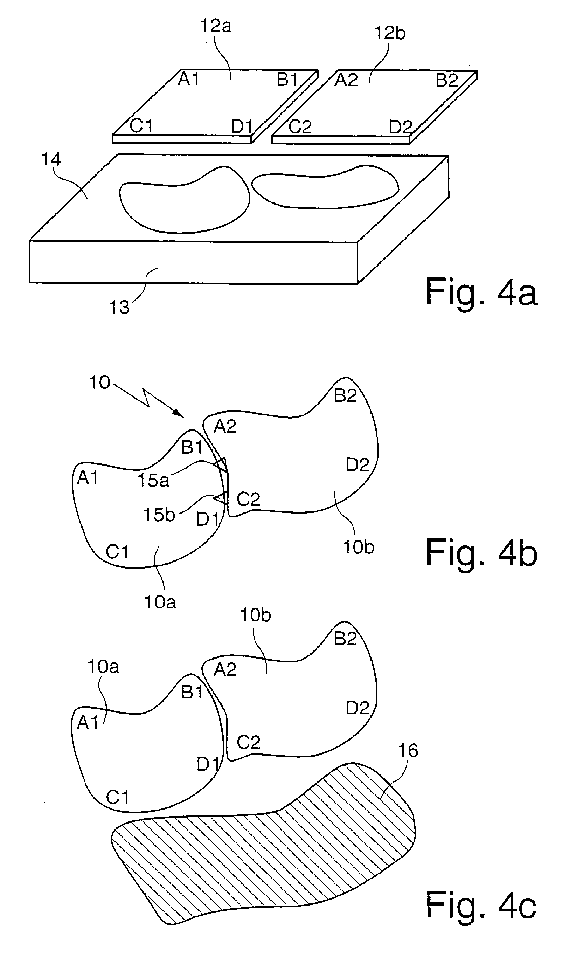

Auch weitere Varianten zur Herstellung des Formkörpers 10 sind möglich, wie beispielsweise in **Fig. 4a-c** anhand von zwei planparallelen Glasrohlingen 12a, 12b gezeigt, deren Ecken mit **A1, B1,** ... bzw. **A2, B2,** ... bezeichnet sind. Die Glasrohlinge 12a, 12b werden auf die in Fig. 4a gezeigte Absenkform 13 aufgelegt, deren geformte Oberfläche 14 sich von der in Fig. 3 gezeigten Oberfläche dadurch unterscheidet, dass die Glasrohlinge 12a, 12b nach dem Absenken nicht an einer gemeinsamen Berührungskante anliegen, wie durch die sich nicht überlappenden Bereiche auf der geformten Oberfläche 14 angedeutet, welche die Lage der abgesenkten Glasrohlinge darstellen.
Die abgesenkten Glasrohlinge 10a, 10b können hierbei wie in Fig. 4b gezeigt durch Verbindungsstücke **15a, 15b** zwischen den benachbarten Kanten B1-D1 und A2-C2 aneinander befestigt und in ihrer Lage zueinander fixiert werden. Hierbei kann zusätzlich noch eine stoffschlüssige Verbindung z.B. durch punktuelles Verkleben in Bereichen der Kanten B1-D1 bzw. A2-C2 vorgenommen werden, in denen deren Abstand voneinander klein genug für eine solche Verbindung ist. Alternativ oder zusätzlich können die abgesenkten Glasrohlinge 10a, 10b mittels einer fixierenden Struktur **1**6 aus faserverstärktem Kunststoff großflächig auf der Rückseite, d.h. an der der Absenkform 13 gegenüberliegenden Seite, aneinander befestigt werden, wie in **Fig. 4c** gezeigt. Der Temperaturausdehnungskoeffizient der fixierenden Struktur 16 ist hierbei an den Temperaturausdehnungskoeffizienten der Glasrohlinge 10a, 10b angepasst, damit die Lagefixierung sich bei der nachfolgenden Beschichtung nicht verändert. Selbstverständlich kann der Formkörper 10 bei allen gezeigten Varianten gegebenenfalls in einem nachfolgenden Verfahrensschritt durch Erhitzen in eine Glaskeramik umgewandelt werden.

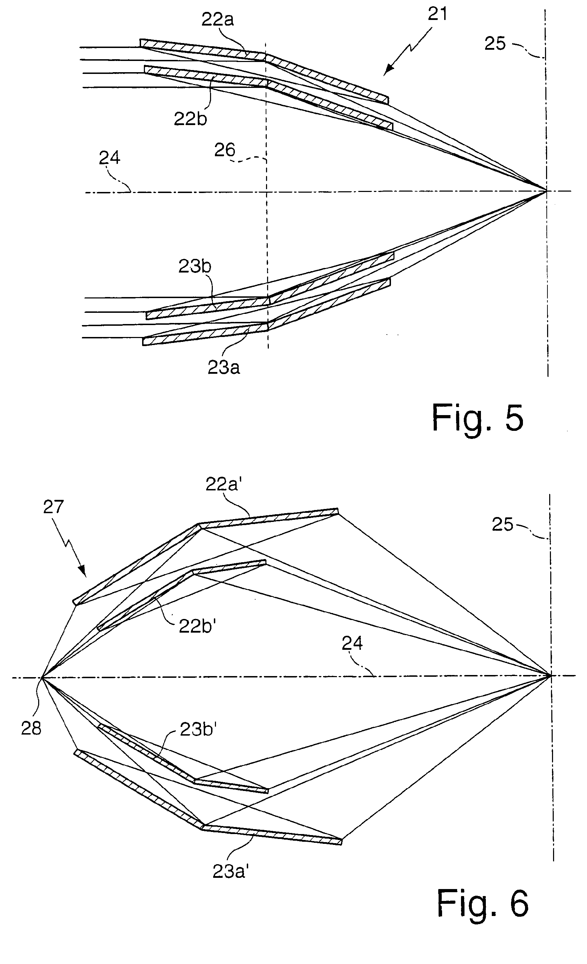

Neben der in Fig.1 gezeigten Anwendung des Formkörpers 10 in dem Fernglas 1, welches für Licht im sichtbaren Spektralbereich ausgelegt ist, kann der Formkörper durch Aufbringen geeigneter Beschichtungen auch als reflektierendes Element für andere Spektralbereiche eingesetzt werden, wie in **Fig. 5** für den Röntgen-Wellenlängenbereich und in **Fig. 6** für den EUV-Wellenlängenbereich gezeigt.

Fig. 5 zeigt eine schematische Darstellung eines abbildenden Teleskops **21** vom Wolter-Typ I, welches einfallendes Röntgenlicht in einer Fokusebene **25** fokussiert, die rechtwinklig zu einer optischen Achse **24** des Teleskops 21 angeordnet ist. Zu diesem Zweck weist das Teleskop 21 eine Mehrzahl von konzentrisch angeordneten, rotationssymmetrischen und ineinander geschachtelten Spiegelschalen vom Wolter-Typ auf, die azimutal segmentiert sind. Ein erstes und zweites Spiegelelement **22a, 23a** einer ersten Spiegelschale und ein erstes und zweites Spiegelelement **22b, 23b** einer zweiten, weiter innen angeordneten Spiegelschale sind in Fig. 5 dargestellt. Die Spiegelelemente 22a bis 23b bestehen im Wesentlichen aus dem Formkörper 10, der wie oben beschrieben hergestellt wurde und auf dem an einer Seite eine für Röntgenlicht reflektierende Beschichtung aufgebracht ist. Die Spiegelelemente 22a bis 23b werden unter streifendem Einfall betrieben, wobei der physikalische Effekt der Totalreflexion ausgenützt wird. In der Anordnung von Fig. 5 weist jedes der Röntgen-Spiegelelemente 22a bis 23b einen ersten, hyperbolischen Teilbereich (von der Fokusebene 25 weg) und einen zweiten, parabolischen Teilbereich (zur Fokusebene 25 hin) auf, die durch einen scharfen Knick der Spiegelsegmente 22a bis 23b, welcher in einer Ebene **26** parallel zur Fokusebene 25 verläuft, getrennt sind. Die Dicke der Spiegelelemente beträgt in der geschachtelten Konfiguration von Fig. 5 weniger als 2 mm. Die geformten Glasrohlinge 10a, 10b, welche den Formkörper 10 bilden, aus dem die Röntgenspiegel 22a bis 23b bestehen, sind an dem Knick durch Verkleben miteinander verbunden, wie weiter oben dargestellt.

In **Fig. 6** ist eine weitere Anwendung aus dem EUV-Wellenlängenbereich gezeigt, und zwar ein EUV-Kollektor **27,** der in einem Beleuchtungssystem einer Projektionsbelichtungsanlage für die Mikrolithographie verwendet wird, um das von einer Plasmalichtquelle **28** ausgehende Licht in einem Fokuspunkt in der Fokusebene 25 zu bündeln. Der EUV-Kollektor 27 weist eine dem Teleskop 21 von Fig. 5 vergleichbare Struktur auf, da dieser eine Mehrzahl von konzentrisch ineinander geschachtelten Spiegelschalen aufweist, die unter streifendem Einfall betrieben werden. Aufgrund der Tatsache, dass der EUV-Kollektor 27 zum Bündeln von EUV-Strahlung an Stelle von harter Röntgenstrahlung ausgelegt ist, können die Winkel, unter denen die Spiegelschalen jeweils getroffen werden, geringfügig größer gewählt werden. In Fig. 6 sind den Spiegelelementen 22a bis 23b entsprechende Spiegelelemente **22a'** bis **23b'** gezeigt, welche in einem ersten hyperbolischen Teilbereich in der Nähe der Lichtquelle 28 und einen zweiten elliptischen Teilbereich in der Nähe der Brennebene 25 aufweisen, die durch einen Knick in den Spiegelelementen 22a' bis 23b' getrennt sind. An dem Knick sind - entsprechend Fig. 5 - zwei durch Absenken geformte Glasrohlinge, welche jeweils dem hyperbolisch bzw. elliptisch geformten Teilbereich entsprechen, durch Kleben miteinander verbunden.

Das oben dargestellte Verfahren bzw. der zugeordnete Formkörper ermöglichen die Herstellung von reflektiven optischen Elementen mit geringen Passfehlertoleranzen und Anstiegsfehlertoleranzen, auch wenn diese diskontinuierliche Bereiche, z.B. Knicke, aufweisen, indem die reflektiven optischen Elemente aus mehreren Rohlingen zusammengesetzt werden, wobei bereits während des Replikationsprozesses die relative Lage der geformten Rohlinge zueinander fixiert wird, sodass ein Formkörper mit einer festgelegten Geometrie entsteht, welche der in der jeweiligen optischen Anwendung verwendeten Geometrie entspricht.

## Patentansprüche

1. Verfahren zum Herstellen eines Formkörpers (10) aus Glas oder Glaskeramik, umfassend die Schritte:
(a) Auflegen von mindestens zwei Glasrohlingen (12a, 12b) nebeneinander auf eine geformte Oberfläche (14) einer temperaturbeständigen Absenkform (13),
(b) Absenken der Glasrohlinge (12a, 12b) auf die geformte Oberfläche (14) durch Erhitzen der Absenkform (13) und der Glasrohlinge (12a, 12b),
(c) Befestigen der abgesenkten Glasrohlinge (10a, 10b) aneinander zur Bildung des Formkörpers (10), und
(d) Abheben des Formkörpers (10) von der Absenkform (13).

2. Verfahren nach Anspruch 1, bei dem in Schritt (c) das Befestigen stoffschlüssig, insbesondere durch zumindest punktuelles Verkleben oder Verschweißen, an einer Berührungskante (11) erfolgt, an der die abgesenkten Glasrohlinge (10a, 10b) zumindest teilweise aneinander anliegen.

3. Verfahren nach Anspruch 1 oder 2, bei dem in Schritt (c) das Befestigen durch Anbringen mindestens eines Verbindungsstücks (15a, 15b) zwischen benachbarten Kanten (B1-D1, A2-C2) der abgesenkten Glasrohlinge (10a, 10b) erfolgt.

4. Verfahren nach einem der vorhergehenden Ansprüche, bei dem in Schritt (c) die abgesenkten Glasrohlinge (10a, 10b) mittels einer fixierenden Struktur (16), insbesondere aus faserverstärktem Kunststoff, rückseitig aneinander befestigt werden.

5. Verfahren nach Anspruch 4, bei dem ein Temperaturausdehnungskoeffizient der fixierenden Struktur (16) an den Temperaturausdehnungskoeffizienten der Glasrohlinge (10a, 10b) angepasst ist.

6. Verfahren nach einem der vorhergehenden Ansprüche, bei dem in einem auf Schritt (d) folgenden Schritt in mindestens einem, bevorzugt zwei oder mehr Teilbereichen (6a, 6b) reflektierende Beschichtungen auf den Formkörper (10) aufgebracht werden.

7. Verfahren nach Anspruch 6, bei dem der beschichtete Formkörper (10) rückseitig auf einem Träger befestigt wird.

8. Verfahren nach einem der vorhergehenden Ansprüche, bei dem in einem Schritt (a) vorausgehenden Schritt die Absenkform (13) aus einem temperaturbeständigen Material, insbesondere einer Keramik, hergestellt wird.

9. Verfahren nach einem der vorhergehenden Ansprüche, bei dem die geformte Oberfläche (14) der Absenkform (13) als ein Freiform-Profil, ein Kegelprofil, ein Hyperbel-Profil oder ein Wolter-Profil ausgeformt wird.

10. Formkörper (10) aus Glas oder Glaskeramik, insbesondere hergestellt nach dem Verfahren nach einem der vorhergehenden Ansprüche, umfassend: mindestens zwei aneinander befestigte, durch Absenken geformte Glasrohlinge (10a, 10b).

11. Formkörper nach Anspruch 10, **gekennzeichnet durch** eine Passfehlertoleranz von weniger als 100 µm, bevorzugt weniger als 30 µm, insbesondere weniger als 10 µm.

12. Formkörper nach einem der Ansprüche 10 oder 11, **gekennzeichnet durch** eine Anstiegfehlertoleranz von weniger als 5 Minuten, bevorzugt von weniger als 0,2 Minuten bei einer Anstiegsbezugslänge von 1 ± 0,1 mm.

13. Formkörper nach einem der Ansprüche 10 bis 12, **gekennzeichnet durch** mindestens eine beim Absenken an wenigstens einem der Glasrohlinge (10a, 10b) ausgeformte Lagereferenzstruktur.

14. Formkörper nach einem der Ansprüche 10 bis 13, der in wenigstens einem, bevorzugt mindestens zwei Teilbereichen (6a, 6b) eine reflektierende Beschichtung aufweist.

15. Formkörper nach Anspruch 14, bei dem die reflektierende Beschichtung für die Reflexion von Röntgenstrahlung oder EUV-Strahlung ausgelegt ist.

16. Formkörper nach Anspruch 14, bei dem die reflektierende Beschichtung für die Reflexion von Licht im sichtbaren Wellenlängenbereich ausgelegt ist.

17. Fernglas (1) mit einer Mehrzahl von Spiegeln (6a', 6b', 7a', 7b'), **gekennzeichnet durch** mindestens einen Formkörper (10) nach Anspruch 16, wobei mindestens zwei der Spiegel (6a', 6b') **durch** die Teilbereiche (6a, 6b) des Formkörpers (10) mit der reflektierenden Beschichtung gebildet sind.

18. EUV-Spiegelelement (22a', 22b', 23a', 23b'), insbesondere für einen EUV-Kollektor (27) für die Mikrolithographie, gebildet durch einen Formkörper (10) nach Anspruch 15.

19. Röntgenspiegelelement (22a, 22b, 23a, 23b), insbesondere für ein Röntgenteleskop (25), gebildet durch einen Formkörper (10) nach Anspruch 15.
